# EUROPÄISCHE PATENTSCHRIFT

(11) **EP 2 121 372 B1**
(45) Veröffentlichungstag und Bekanntmachung des Hinweises auf die Patenterteilung: **24.11.2010**
(21) Anmeldenummer: 07846815.4
(22) Anmeldetag: 26.11.2007
(51) Int. Cl.: B60K 37/06, B60K 35/00, G06F 3/033

(54) **BERÜHRUNGSLOS AKTIVIERBARE ANZEIGE- UND BEDIENVORRICHTUNG**
CONTACTLESS ACTIVATED DISPLAY AND OPERATION DEVICE
DISPOSITIF D'AFFICHAGE ET DE COMMANDE POUVANT ETRE ACTIVE SANS CONTACT

(30) Priorität: 21.12.2006 DE 102006061781; 27.06.2007 DE 102007029618
(43) Veröffentlichungstag der Anmeldung: 25.11.2009
(73) Patentinhaber: Volkswagen Aktiengesellschaft, 38436 Wolfsburg (DE)
(72) Erfinder: WÄLLER, Christoph, 38102 Braunschweig (DE); BENDEWALD, Lennart, 38442 Wolfsburg (DE); GROTE, Heiner, 38118 Braunschweig (DE); BACHFISCHER, Katharina, 40476 Düsseldorf (DE)
(86) Internationale Anmeldenummer: PCT/EP2007/010246
(87) Internationale Veröffentlichungsnummer: WO 2008/080465

(56) Entgegenhaltungen:
- DE-A1- 10 015 726
- US-A1- 2006 265 126

## Beschreibung

Die Erfindung betrifft eine Anzeige- und Bedienvorrichtung eines Kraftfahrzeugs, die in einem ersten Modus oder in einem zweiten, aktivierten Modus betreibbar ist, umfassend eine Anzeigevorrichtung zum Anzeigen von Informationen auf eine Anzeigefläche und einer positionsempfindlichen Sensoreinheit zum Ermitteln einer Position eines Betätigungselements relativ zu der Anzeigefläche und oder einem interaktiven Bedienelement, wobei der zweite Modus in Abhängigkeit von der Position des Betätigungselements relativ zu der Anzeigefläche oder dem interaktiven Bedienelement aktivierbar ist.

In Kraftfahrzeugen werden Anzeige- und Bedienvorrichtungen vermehrt eingesetzt, um einem Fahrer zum einen Informationen zu vermitteln und zum andern eine Bedienung von Fahrzeugfunktionen und Fahrzeugsystemen, beispielsweise einem Navigationssystem, usw. zu ermöglichen. Da eine Größe der Anzeigefläche der Anzeigevorrichtung begrenzt ist und zusätzlich der Bauraum des Fahrzeugs eine Größe der Anzeigefläche ebenfalls begrenzt, hat es sich als vorteilhaft herausgestellt, eine solche Anzeige- und Bedienvorrichtung in mindestens zwei Modi zu betreiben. In einem ersten Modus werden die Informationen optimiert für eine visuelle Wahrnehmung dargestellt. In einem zweiten Modus wird eine veränderte Informationswiedergabe gewählt, vorzugsweise eine solche, die eine Bedienung von Fahrzeugfunktionen und Fahrzeugsystemen usw. ermöglicht, die mit der Anzeige- und Bedienvorrichtung verknüpft sind.

Bei den im Stand der Technik bekannten Anzeige- und Bedienvorrichtungen sind hierfür benachbart zu und/oder beabstandet von der Anzeigefläche der Anzeigevorrichtung angeordnete Bedienelemente vorgesehen. Diese können unterschiedlich ausgestaltet sein. Hierbei kann es sich insbesondere um Tastschalter, Kippschalter, Schieberegler, Drehregler, Drehdrückknöpfe usw. handeln. Mit Hilfe dieser Bedienelemente kann beispielsweise eine in dem zweiten Betriebsmodus dargestellte Benutzerschnittstelle beeinflusst und bedient werden. Soll eine solche Anzeige- und Bedienvorrichtung beispielsweise verwendet werden, um ein Navigationssystem zu bedienen, so ist für eine Eingabe einer Zieladresse beispielsweise vorgesehen, dass alphanumerische Zeichen auf der Anzeigefläche dargestellt werden, von denen einem ein Fokus zugewiesen ist. Über ein beispielsweise als Drehknopf ausgebildetes Bedienelement kann der Fokus zu einem gewünschten alphanumerischen Zeichen bewegt werden und durch ein Betätigen eines zweiten Bedienelements oder in dem Falle, dass der Drehknopf als Drehdrückknopf ausgebildet ist, über ein Drücken des Drehdrückknopfes ein entsprechendes alphanumerisches Zeichen ausgewählt werden. Hierüber ist es möglich, sukzessive eine Adresse für eine zielgeführte Navigation einzugeben.

Da eine Anzahl der Bedienelemente in einem Kraftfahrzeug begrenzt ist, ist es üblich, den unterschiedlichen Bedienelementen kontextabhängig unterschiedliche Funktionen und/oder Funktionalitäten zuzuweisen. Ein als Tastschalter benachbart zu der Anzeigefläche angeordnetes Bedienelement kann beispielsweise in einem Bedienkontext eines Navigationssystems eine Ausschnittsvergrößerung einer dargestellten Umgebungskarte des Kraftfahrzeugs bewirken. In einem anderen Bedienkontext, in dem beispielsweise ein CD-Player über die Anzeige- und Bedienvorrichtung bedient wird, kann demselben Bedienelement eine Stoppfunktion zugewiesen sein, d.h., dass eine Wiedergabe eines Titels bei Betätigen dieses Bedienelements abgebrochen wird. Die unterschiedlichen Funktionalitäten und Funktionen, die den einzelnen Bedienelementen zugeordnet sind, werden häufig über so genannte Bedienelementzuordnungen dargestellt, die vorzugsweise benachbart zu den Bedienelementen oder in einer geometrischen Konfiguration, die einer Konfiguration der verfügbaren Bedienelemente entspricht, auf der Anzeigefläche angeordnet sind. In der Regel ist eine Bedienelementzuordnung als eine Fläche ausgebildet, die eine alphanumerische Beschreibung der Funktion oder Funktionalität und/oder ein Piktogramm umfasst, welches die Funktion oder Funktionalität beschreibt.

Ein Wechsel in den zweiten, aktivierten Modus ist von der Position eines Betätigungselements abhängig, das in der Regel ein Finger eines Nutzers ist. Wird der Finger beispielsweise an die Anzeigefläche oder ein hier als interaktives Bedienelement bezeichnetes Bedienelement angenähert, so wird ein solcher Wechsel ausgelöst. Ein interaktives Bedienelement ist ein Bedienelement, das mit einer positionsempfindlichen Sensoreinheit gekoppelt ist, die in der Lage ist, die Position eines Betätigungselements relativ zu dem interaktiven Bedienelement zu ermitteln. Ein solches interaktives Bedienelement kann unterschiedliche Ausgestaltungen aufweisen. Auch eine als Touchscreen ausgebildete Anzeigevorrichtung ist ein interaktives Bedienelement. Jedoch kann ein interaktives Bedienelement beabstandet von der Anzeigefläche angeordnet sein und eine Änderung des Betriebsmodus der Anzeige- und Bedienvorrichtung auslösen. So ist es vorteilhaft, eine kontextbezogene Funktion, Funktionalität usw. die der interaktiven Taste zugeordnet ist, auf der Anzeigefläche in Form einer Bedienelementzuordnung anzuzeigen, wenn sich ein Finger dem interaktiven Bedienelement annähert.

Wird die Anzeige- und Bedienvorrichtung in dem ersten Modus betrieben, in dem beispielsweise Informationen über ein Fahrzeugsystem ausgegeben werden, so ist es wünschenswert, unabhängig von den Informationen bzw. dem Fahrzeugsystem, über das die ausgegebenen Informationen informieren, Bedienelementen, die benachbart zu der Anzeigeflächen oder einem interaktiven Bedienelement angeordnet sind, feste Funktionen bzw. Funktionalitäten zuzuordnen zu können. Ebenso kann es bei einer als Touchscreen ausgebildeten Anzeige- und Bedienvorrichtung wünschenswert sein, bestimmte Bedienelemente vorzusehen, die bedienbar sind, ohne einen Wechsel aus dem ersten Modus in den zweiten aktivierten Modus auszulösen. Dennoch soll diesen Bedienelementen in dem zweiten Modus eine Funktionalität kontextabhängig zuordenbar sein bzw. eine Bedienbarkeit möglich sein, ohne einen Betrieb in dem zweiten Modus zu beeinflussen.

Dokument US 2006/265126 beschreibt eine Anzeige- und Bedienvorrichtung mit den Merkmalen des Oberbegriffs des Anspruchs 1.

Der Erfindung liegt somit die Aufgabe zugrunde, eine Vorrichtung eingangs genannter Art zu schaffen, die eine verbesserte Nutzung von benachbart zu einer Anzeigevorrichtung und/oder einem interaktiven Bedienelement angeordneten Bedienelementen und/oder an einem Rand der Anzeigevorrichtung angeordneten Bedienelementen zu ermöglichen.

Die Aufgabe wird erfindungsgemäß durch eine Vorrichtung mit den Merkmalen des Patentanspruchs 1 gelöst. Vorteilhafte Ausgestaltungen der Erfindung ergeben sich aus den Unteransprüchen.

Hierfür ist vorgesehen, mindestens einen Aktivierungsbereich und mindestens einen Haltebereich vorzusehen, die unterschiedlich ausgebildet sind. Eine Aktivierung des zweiten Modus ist von einer Anwesenheit des Betätigungselements in dem mindestens einen.Aktivierungsbereich abhängig. Ein Verbleiben in dem zweiten Modus, d.h. ein Betreiben der Anzeige- und Bedienvorrichtung in dem zweiten Modus, ist hingegen von einer Anwesenheit des Betätigungselements in dem mindestens einen Haltebereich abhängig. Der mindestens eine Aktivierungsbereich und der mindestens eine Haltebereich können einen gemeinsamen Bereich aufweisen, es gibt jedoch mindestens einen Teilbereich des mindestens einen Haltebereichs, der nicht von dem mindestens einen Aktivierungsbereich umfasst ist. In diesem Bereich oder angrenzend an diesen Bereich kann ein Bedienelement vorgesehen sein, welches betätigbar ist, ohne von dem ersten Modus in den zweiten Modus zu wechseln, Insbesondere wird eine Vorrichtung eingangs genannter Art vorgeschlagen, bei der mindestens ein Aktivierungsbereich und mindestens ein hiervon verschiedener Haltebereich existieren und die Aktivierung des zweiten Modus erfolgt, wenn die ermittelte Position des Betätigungselements in dem mindestens einen Aktivierungsbereich liegt, und der Betrieb in dem zweiten Modus von der Anwesenheit des Betätigungselements in dem mindestens einen Haltebereich abhängig ist.

Als besonders vorteilhaft hat es sich herausgestellt, den mindestens einen Aktivierungsbereich so auszugestalten, dass dieser angrenzend an die Anzeigefläche nicht eine gesamte Fläche der Anzeigefläche überdeckt. Hierdurch wird die Möglichkeit geschaffen, so genannte virtuelle Bedienelemente, sofern die Anzeige- und Bedienvorrichtung beispielsweise als Touchscreen ausgebildet ist, oder ein hinter der oder auf der Bedienfläche liegendes Betätigungselement, beispielsweise bei einer projizierenden Anzeige- und Bedienvorrichtung, anzuordnen, das betätigbar ist, ohne mit dem Betätigungselement in den mindestens einen Aktivierungsbereich eindringen zu müssen.

Besonders bevorzugt wird eine Ausführungsform, bei der der mindestens eine Haltebereich angrenzend an die Anzeigefläche einen größeren Teil der Anzeigefläche als der mindestens eine Aktivierungsbereich überdeckt, vorzugsweise die gesamte Fläche der Anzeigefläche. Hierdurch wird es möglich, das Betätigungselement zu allen Positionen auf der Anzeigefläche zu bewegen, ohne einen Betrieb der Anzeige- und Bedienvorrichtung in dem zweiten Modus zu beeinflussen.

Eine besonders komfortable Ausführungsform der Erfindung erhält man, wenn die mindestens eine positionsempfindliche Sensoreinheit eine berührungslos wirkende Sensoreinheit ist. Unter einer berührungslos wirkenden Sensoreinheit wird in diesem Zusammenhang eine Sensoreinheit verstanden, bei der das Betätigungselement an die Anzeigefläche oder entsprechend an das mindestens eine interaktive Bedienelement angenähert werden kann und Position des Betätigungselements ermittelt wird, ohne dass das Betätigungselement die Anzeige- und Bedienvorrichtung oder entsprechend das mindestens eine interaktive Bedienelement berührt.

Bei einer bevorzugten Ausführungsform ist die mindestens eine positionsempfindliche Sensoreinheit so ausgebildet, dass die Position des Betätigungselements, vorzugsweise eines Körperteils, im dreidimensionalen Raum erfassbar ist. Diese Ausführungsform bietet den Vorteil, dass ein Nutzer die Anzeige- und Bedienvorrichtung intuitiv beispielsweise mit den Fingern seiner Hand bedienen kann. Dieses ermöglicht eine Vielzahl von Möglichkeiten für eine Gestaltung einer Benutzerschnittstelle, über die eine Bedienung der mit der Anzeige- und Bedienvorrichtung gekoppelten Fahrzeugsysteme usw. möglich wird.

Um auch Bedienelemente, die angrenzend an die Anzeigefläche der Anzeige- und Bedienvorrichtung und/oder entsprechend angrenzend an das mindestens eine interaktive Bedienelement angeordnet sind, bedienen zu können, ohne den Betrieb der Anzeige- und Bedienvorrichtung im zweiten Modus zu beeinflussen, ist bei einer bevorzugten Ausführungsform der Erfindung vorgesehen, dass sich der mindestens eine Haltebereich seitlich über mindestens eine Grenze der Anzeigefläche oder des mindestens einen interaktiven Bedienelements hinaus erstreckt. Auch wenn keine Bedienelemente in diesem Bereich angeordnet sind, bietet eine solche Ausführungsform den Vorteil, dass der Nutzer das Betätigungselement in eine Position bewegen kann, die ihm beispielsweise eine vollständige Wahrnehmung der Anzeigefläche ermöglicht, ohne dass ein Teil dieser Anzeigefläche durch das Betätigungselement verdeckt wird. Dennoch wird in einer solchen Situation der Betrieb der Anzeige- und Bedienvorrichtung in dem zweiten Modus nicht beeinträchtigt. Ist das mindestens eine interaktive Bedienelement vorzugsweise als positionsempfindlicher Berührungssensor, insbesondere als Touchpad, ausgebildet, so kann ein Nutzer mit dem Betätigungselement eine Bedienhandlung ausführen, bei der er das Betätigungselement auch neben das mindestens eine Bedienelement, beispielsweise als Bewegungsvorsetzung einer streichenden Bewegung, bewegen, ohne dass ein Betrieb in dem zweiten Modus beeinträchtigt ist.

Vorzugsweise ist der mindestens eine Haltebereich so ausgebildet, dass er mindestens einen Bereich vor einem neben der Anzeigefläche und/oder entsprechend neben dem mindestens einen interaktiven Bedienelement angeordneten Bedienelement umfasst.

Bei einer besonders bevorzugten Ausführungsform der Erfindung ist vorgesehen, dass der mindestens eine Aktivierungsbereich so ausgestaltet ist, dass das mindestens eine neben der Anzeigefläche oder entsprechend neben dem mindestens einen interaktiven Bedienelement angeordnete Bedienelement und/oder mindestens ein an einem Rand der Bedienfläche angeordnetes weiteres Bedienelement durch das Betätigungselement bedienbar sind, ohne dass das Betätigungselement in den mindestens einen Aktivierungsbereich gelangt.

Der zweite Modus ist bevorzugt als Bedienmodus ausgebildet, bei dem mindestens ein zusätzliches Bedienelement und/oder mindestens eine Bedienelementzuordnung für ein beabstandet zu der Anzeigefläche angeordnetes Bedienelement und/oder für das mindestens eine interaktive Bedienelement zusätzlich und/oder optimiert für eine Bedienung dargestellt sind. Unter einer optimierten Darstellung für eine Bedienung wird eine Darstellung eines Bedienelements oder einer Bedienelementzuordnung für den Nutzer verstanden, die grafisch verbessert wahrnehmbar und verwendbar ist, um ihm eine Bedienhandlung zu erleichtern. Insbesondere wird ein virtuelles Bedienelement vergrößert dargestellt und/oder grafisch hervorgehoben dargestellt, um eine Bedienung mittels eines Körperteils, insbesondere eines Fingers, zu erleichtern und/oder eine Zuordnung einer Funktion zu einem beabstandet, beispielsweise neben der Anzeigefläche angeordneten Bedienelement besser wahrnehmbar zu gestalten.

Bei einer vorteilhaften Ausführungsform der Erfindung ist vorgesehen, dass der Betrieb in dem zweiten Modus eine grafisch wahrnehmbare Modusänderung nur in einem Teilbereich der Anzeigefläche bewirkt und in dem Restbereich der Anzeigefläche ein Betrieb wie in dem zuvor aktivierten Modus vorsetzt ist. So kann beispielsweise nur ein Teilbereich der Anzeigefläche zum Einblenden eines Menüs und/oder von virtuellen Bedienelementen genutzt werden, während der Rest der Anzeigefläche beispielsweise weiter zur Darstellung von Informationen für eine Informationsvermittlung genutzt wird. Eine entsprechende Umskalierung der dargestellten Informationen aufgrund der Flächeneinschränkung des Rests der Anzeigefläche gegenüber der gesamten Anzeigefläche kann vorgesehen sein.

Ebenso kann es vorteilhaft sein, unterschiedliche Bedienmodi aktivieren zu können. Eine bevorzugte Ausführungsform der Erfindung sieht vor, dass in dem ersten Modus mehreren Darstellungspositionen auf der Anzeigefläche jeweils ein von übrigen Aktivierungsbereichen disjunkter Aktivierungsbereich zugeordnet ist und bei einem Erfassen des Betätigungselements in einem der Aktivierungsbereiche, ein diesem der Aktivierungsbereiche zugeordneter Modus aktiviert wird, der eine Modusänderung nur in einem diesem der Aktivierungsbereiche zugeordneten Teilbereich der Anzeigefläche bewirkt, und der Betrieb in diesem Modus von der Anwesenheit des Betätigungselements in einem von dem Aktivierungsbereich verschiedenen, diesem zugeordneten Haltebereich abhängig ist. Je nach dem, welcher Darstellungsposition sich das Betätigungselement annähert, d.h., in welchen Aktivierungsbereich sich das Betätigungselement bewegt, wird ein unterschiedlicher zweiter Modus ausgelöst. Gegebenfalls können über eine Annäherung des Betätigungselements an mehrere der Darstellungspositionen mehrere "Bedienmodi" gleichzeitig oder zeitversetzt ausgelöst werden. Diese werden vorzugsweise in unterschiedlichen Teilbereichen der Anzeigefläche realisiert. Den unterschiedlichen Aktivierungsbereichen können Haltebereiche zugeordnet sein, die einander überlappen oder sogar identisch sind.

Bei einer bevorzugten Ausführungsform der Erfindung ist der einem der disjunkten Aktivierungsbereiche zugeordnete Haltebereiche von den übrigen Aktivierungsbereichen und vorzugsweise auch von den diesen zugeordneten Haltebereichen disjunkt. Ist ein Haltebereich disjunkt von den übrigen Aktivierungsbereichen, so kann durch ein Verweilen in dem Haltebereich kein weiterer Betriebsmodus durch ein Eindringen in einen anderen Aktivierungsbereich aktiviert werden. Sind auch die Haltebereiche disjunkt, so kann eine Anwesenheit des Betätigungselements in einem Haltebereiche nicht zusätzlich ein Aufrechterhalten eines weiteren Betriebsmodus bewirken, der beispielsweise durch eine Anwesenheit eines weiteren Betätigungselements, beispielsweise eines anderen Nutzers, in einem der anderen Aktivierungsbereiche aktiviert wurde. Beide Nutzer können unterschiedliche Betriebsmodi in Teilbereichen der Anzeigefläche unabhängig voneinander aktivieren und vorzugsweise (bei disjunkten Haltebereichen) auch beenden.

Um einem Nutzer das Vorhandensein von Aktivierungsbereichen zu signalisieren, ist bei einer Ausführungsform der Erfindung vorgesehen, dass an mindestens einer der Darstellungspositionen ein Indikator dargestellt ist. Ein Indikator umfasst eine grafische Darstellung, die einen Hinweis auf einen aktivierbaren weiteren Modus gibt.

Um einen mit einer Darstellungsposition verknüpften Betriebsmodi möglichst zuverlässig aktivieren zu können, ist es vorteilhaft, wenn mindestens eine der Darstellungspositionen benachbart zu dem mindestens einen Sensor auf der Anzeigefläche angeordnet ist. Hierbei wird davon ausgegangen, dass der Sensor die Position des Betätigungselements besonders exakt in der Nähe des Sensors bestimmen kann. Sind mehrere Sensoren vorhanden ist es vorteilhaft, die Darstellungspositionen alle möglichst benachbart zu einem der Sensoren auf der Anzeigefläche anzuordnen, um eine sichere Positionsbestimmung und hierüber eine zuverlässige Aktivierung des entsprechenden Betriebsmodus sicherzustellen.

Um einen Wechsel aus dem zweiten Modus in den ersten Modus ohne eine besondere Betätigungshandlung zu ermöglichen, ist bei einer bevorzugten Ausführungsform vorgesehen, dass ein Betrieb in dem zweiten Modus nach einer Aktivierung über ein Erfassen des Betätigungselements in dem mindestens einen Aktivierungsbereich nur für eine vorgegebene Zeitspanne erfolgt, nachdem das Betätigungselement den mindestens einen Haltebereich verlassen hat. Die vorgegebene Zeitspanne kann sehr klein oder auch gleich null gewählt werden. Während der vorgegebenen Zeitspanne kann es vorgesehen sein, dass die Ausgestaltung der grafischen Darstellung im zweiten Modus verändert wird, um dem Nutzer anzuzeigen, dass das Betätigungselement den mindestens einen Haltebereich verlassen hat. Beispielsweise kann ein Transparenzniveau oder eine Deckung der eingeblendeten Bedienelemente und/oder Bedienelementzuordnungen verändert werden.

Da in einem Kraftfahrzeug eine Anzeige- und Bedienvorrichtung meist in ein Cockpit und hier insbesondere in eine Mittelkonsole integriert ist, ist es vorteilhaft, wenn eine Nutzereingabe eines Fahrers von der eines Beifahrers und/oder mehrerer Beifahrer unterschieden werden kann. Daher ist bei einer bevorzugten Ausführungsform vorgesehen, dass die Sensoreinheit Betätigungselemente von mindestens zwei unterschiedlichen Nutzern unterscheiden kann und den mindestens zwei unterschiedlichen Nutzern mindestens zwei unterschiedliche Aktivierungsbereiche zugeordnet sind, wobei eine Aktivierung des zweiten Modus nur erfolgt, wenn eine Position des Betätigungselements eines Nutzers in dem ihm zugeordneten der unterschiedlichen Aktivierungsbereiche erfasst ist. Hierdurch wird es insbesondere möglich, dass sowohl der Fahrer als auch der Beifahrer bestimmte Bedienelemente bedienen können oder auch unterschiedliche Bedienelemente bedienen können, ohne einen Wechsel aus dem ersten Modus in den zweiten Modus auszulösen. Da ein Fahrer und ein Beifahrer sich einer Anzeige- und Bedienvorrichtung in der Mittelkonsole oder entsprechend einem interaktiven Bedienelement jeweils aus einer unterschiedlichen Richtung der Anzeigefläche annähern, ist eine unterschiedliche Ausgestaltung der Aktivierungsbereiche, die in der Regel als Aktivierungsvolumina ausgestaltet sein werden, von besonderem Vorteil.

Die Erfindung wird nachfolgend anhand bevorzugter Ausführungsbeispiele näher erläutert. Hierbei zeigen:
- Fig. 1: eine schematische Darstellung einer Anzeige- und Bedienvorrichtung in einem Kraftfahrzeug;
- Fig. 2a-2d: Ansichten einer Anzeigefläche und von Aktivierungs- und Haltebereichen nach einer Ausführungsform;
- Fig. 3a-3d: Ansichten einer Anzeigefläche und einer weiteren Ausführungsform eines Aktivierungsbereichs und eines Haltebereichs;
- Fig. 4a-4d: Ansichten einer Anzeige- und Bedienvorrichtung mit nutzerbezogenen Aktivierungs- und eines Haltebereichen;
- Fig. 5: eine weitere schematische Darstellung einer Anzeige- und Bedienvorrichtung in einem Kraftfahrzeug;
- Fig. 6a-6b: Ansichten eines interaktiven Bedienelements und von Aktivierungs- und Haltebe- reichen nach einer zusätzlichen Ausführungsform; und
- Fig. 7a-7i: Ansichten einer Anzeigefläche zur Veranschaulichung einer Nutzung der An- zeige Fläche für eine Benutzerschnittstelle die unterschiedliche Aktivierungs- und Haltebereiche umfasst.

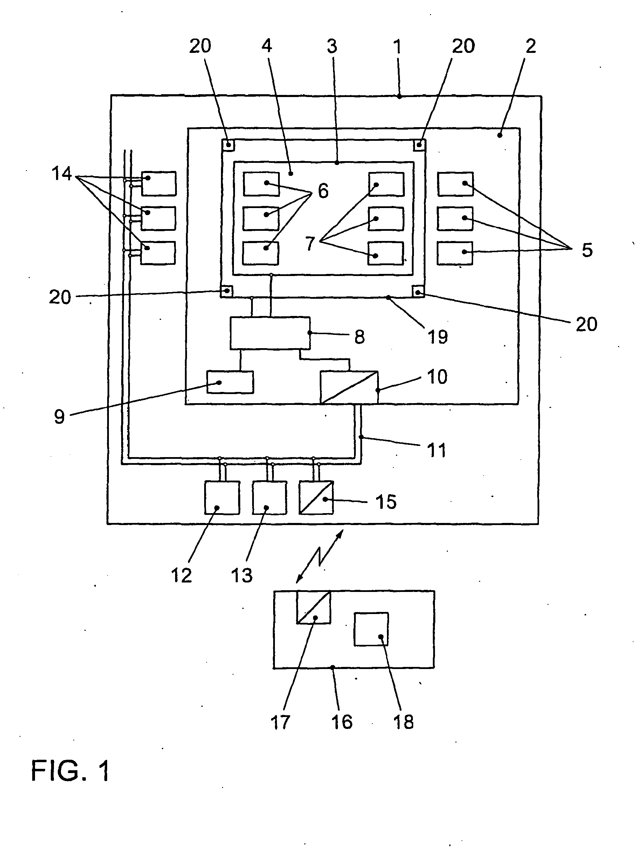

In Fig. 1 ist ein Kraftfahrzeug 1 dargestellt. Dieses umfasst eine Anzeige- und Bedienvorrichtung 2. Die Anzeige- und Bedienvorrichtung umfasst eine Anzeigevorrichtung 3 mit einer Anzeigefläche 4. Die Anzeigevorrichtung 3 ist vorzugsweise als Touchscreen ausgebildet. Die Anzeige- und Bedienvorrichtung 2 umfasst Bedienelemente 5, die in Hardware benachbart zu der Anzeigefläche 4 der Anzeigevorrichtung 3 angeordnet sind. Zusätzlich umfasst die Anzeige-und Bedienvorrichtung 2 mittels der als Touchscreen ausgebildeten Anzeigevorrichtung 3 ausgebildete virtuelle Bedienelemente 6. Diese können über eine Berührung der Anzeigefläche 4 an der Stelle, an der die virtuellen Bedienelemente 6 dargestellt sind, betätigt werden. Benachbart zu den Bedienelementen 5 sind auf der Anzeigefläche 4 Bedienelementzuordnungen 7 in einem Bedienmodus eingeblendet, die den Bedienelementen 5 im jeweiligen Bedienkontext zugeordnete Bedienoptionen; Funktion usw. angeben.

Mit der Anzeigevorrichtung 3 ist eine Steuereinheit 8 verbunden. Die Steuereinheit 8 ist in der Lage, die Anzeigevorrichtung 3 in einem Anzeigemodus und in einem Bedienmodus zu betreiben. Die Steuereinheit 8 ist ferner mit einer Speichervorrichtung 9, in der vorzugsweise ein Softwareprogramm abgelegt ist, mit dem eine Benutzerschnittstelle umgesetzt ist. Die Steuereinheit 8 ist ferner über eine Schnittstelle 10 mit einem Fahrzeugbus 11 verbunden. Über den Fahrzeugbus ist die Anzeige- und Bedienvorrichtung mit Fahrzeugsystemen 12, 13 und anderen Bedienelementen 14 verbunden. Über den Fahrzeugdatenbus 10 und eine Fahrzeugschnittstelle 15 können Daten mit einer fahrzeugexternen Vorrichtung 16 ausgetauscht werden. Die fahrzeugexterne Vorrichtung 16 umfasst hierfür ebenfalls eine Sende- und Empfangsschnittstelle 17, die beispielsweise mit einer Rechnereinheit 18 verbunden ist. Die Rechnereinheit 18 kann beispielsweise einen Dienst zur Verfügung stellen, dessen Informationen auf der Anzeige- und Bedienvorrichtung 2 dargestellt werden und der über die Anzeige- und Bedienvorrichtung 2 bedient werden kann.

Die Anzeige- und Bedienvorrichtung 2 umfasst ferner eine positionsempfindliche Sensoreinheit 19, die mehrere Sensoren 20 umfasst, mit denen ein Betätigungselement, beispielsweise ein Finger, vor der Anzeigefläche 4 der Anzeige- und Bedienvorrichtung 2 im Raum erfasst werden kann. Die Sensoreinheit 19 kann unterschiedliche Verfahren zum Detektieren eines Betätigungselements verwenden.

Die positionsempfindliche Sensoreinheit 19 kann beispielsweise mittels Sensoren ausgestaltet sein, die mittels einer Übertragung von Hochfrequenzsignalen über den Nutzer arbeiten, wie dieses beispielsweise in der WO 2004/078536 beschrieben ist. Alternativ können auf Kameras basierende, ultraschallbasierte oder auf optischen Sensoren basierende Sensoreinheiten verwendet werden.

Ein solcher Sensor, der ein optisches Verfahren verwendet, kann beispielsweise gemäß folgendem Prinzip ausgestaltet sein. Eine Sende-LED strahlt ein rechteckförmig amplitudenmoduliertes Sichtsignal im optischen oder infraroten Wellenlängenbereich ab. Das an einem Objekt, beispielsweise dem Körperteil, reflektierte Lichtsignal wird von einer Photodiode erfasst. Von einer Kompensations-LED wird ein um 180° phasenversetztes ebenfalls rechteckförmig amplitudenmoduliertes Referenzlichtsignal zu der Photodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Photodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen.

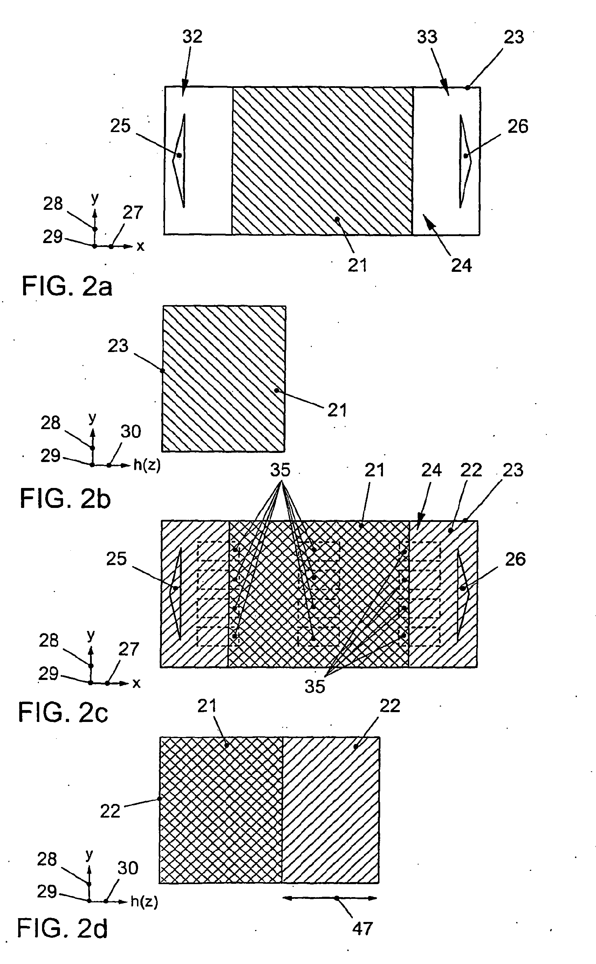

Anhand von Fig. 2a bis 2d sollen beispielhafte Ausgestaltungen eines als Aktivierungsvolumen 21 ausgebildeten Aktivierungsbereichs und eines als Haltevolumen 22 ausgebildeten Haltebereichs beschrieben werden. In Fig. 2a ist eine Draufsicht auf eine als Touchscreen ausgebildete Anzeigefläche 23 einer Anzeige- und Bedienvorrichtung dargestellt. Die Anzeigefläche 23 erstreckt sich in eine x-y-Ebene, wie mittels einer x-Achse 27 und einer y-Achse 28 eines rechtshändigen (x-y-h-)Koordinatensystems 29 angedeutet ist. Die dritte Koordinaten Achse, hAchse 30 (z-Achse), erstreckt sich in den Raum 31 vor der Anzeigefläche 23.

In einem ersten Betriebsmodus sind neben Informationen (nicht dargestellt) die in einem zentralen Bereich 21 wiedergeben sind, zwei als Pfeile ausgebildete so genannte Toggle-Tasten 25, 26 dargestellt. Diese sind als Bedienelemente ausgestaltet. Die Pfeilspitzen der Toggle-Tasten 25 und 26 weisen in die negative (25) und positive (26) Richtung der x-Achse. Sie können beispielsweise in einem ersten Betriebsmodus, einem Anzeigemodus verwendet werden, um zwischen unterschiedlichen Anzeige Kontexten, beispielsweise den Anzeigekontexten unterschiedlicher mittels einer Anzeige- und Bedienvorrichtung in einem Kraftfahrzeug bedienbarer Fahrzeugsysteme hin- und herzuschalten. Hierbei ist es wünschenswert, dass ein Wechsel zwischen unterschiedlichen Ansichten, beispielsweise der eines CD/DVD/mp3-Players und der einer Klimaanlage oder der eines Navigationssystems, möglich ist, ohne in einen anderen Betriebsmodus, beispielsweise einen Bedienmodus zu wechseln, in dem zusätzlich zu den Informationen über die jeweiligen Fahrzeugsysteme, Fahrzeugfunktionen, Dienste usw. Bedienelemente eingeblendet werden.

Daher erstreckt sich der als Aktivierungsvolumen 21 ausgestaltete Aktivierungsbereich angrenzend an die Anzeigefläche 23 nicht über deren gesamte Fläche. Vielmehr sind Randbereich 32, 33, in denen die Toggle-Tasten 25,26 angeordnet sind, ausgespart.

In Fig. 2b ist eine Seitenansicht auf die Anzeigefläche schematisch dargestellt. Die Anzeigefläche 23 weist in der h-Richtung in dieser schematischen Darstellung keine Ausdehnung auf. Das Aktivierungsvolumen 21 erstreckt sich in den Raum 31 vor der Anzeigefläche 23. Das Aktivierungsvolumen 21 ist somit in dieser Ausführungsform quaderförmig ausgebildet. Zu erkennen ist, dass das Volumen vor den Toggle-Tasten 25 und 26 nicht von dem Aktivierungsvolumen 21 umfasst ist. Somit können die Toggle-Tasten 25, 26 durch ein Betätigungselement (nicht dargestellt), in der Regel einen Finger eines Nutzers, bedient werden, ohne das dieses Betätigungselement in das Aktivierungsvolumen gelangt und von dem positionsempfindlichen Sensor oder dessen Auswerteeinheit als in dem Aktivierungsbereich befindlich angesehen wird. Somit unterbleibt ein Wechsel des Betriebsmodus.

Wird das Betätigungselement jedoch in das Aktivierungsvolumen 21 bewegt, so wird ein Wechsel des Betriebsmodus ausgelost. In Fig. 2c ist diese Situation schematisch dargestellt. Bedienelemente 35, die auch als virtuelle Bedienelemente bezeichnet werden, sind bevorzugt transparent über die im zentralen Bereich 24 dargestellten Informationen eingeblendet. Die Bedienelemente 35 sind gestrichelt dargestellt, um diese Transparenz anzudeuten. Andere Ausführungsformen können vorsehen, dass die Bedienelemente, die bei einem Wechsel des Betriebsmodus eingeblendet werden, eine Deckkraft von 100 % aufweisen.

Ein Betrieb in der zweiten Betriebsart, d.h. im zweiten Betriebsmodus, hier im Bedienmodus ist von der Anwesenheit des Betätigungselements, Fingers, vor der Anzeigefläche 23 abhängig. Hierfür ist der als Haltevolumen 22 ausgebildete Haltebereich relativ zu der Anzeigefläche 23 festgelegt. Das Haltevolumen 22 überdeckt angrenzend an die Anzeigefläche 23 deren gesamte Fläche. Das Haltevolumen 22 erstreckt sich ferner in den Raum 31 vor der Anzeigefläche 23, wie in Fig. 2d angedeutet ist. Hierbei erstreckt sich der Haltebereich vorzugsweise weiter in den Raum 31 vor der Anzeigefläche 22 als der Aktivierungsbereich. In der Regel wird der Haltebereich den Aktivierungsbereich vollständig umfassen. Der Finger kann somit über der gesamte Anzeigefläche bewegt werden, ohne das Haltevolumen zu verlassen und einen Wechsel in die erste Betriebsart bzw. den ersten Betriebsmodus, d.h. den Anzeigemodus, auszulösen, der eintritt, wenn das Betätigungselement, der Finger, nicht mehr oder seit einer vorgegebenen Zeitspanne nicht mehr in dem Haltevolumen erfasst ist. Insbesondere können die Toggle-Tasten 25, 26 bedient werden, ohne den zweiten Betriebsmodus zu beenden.

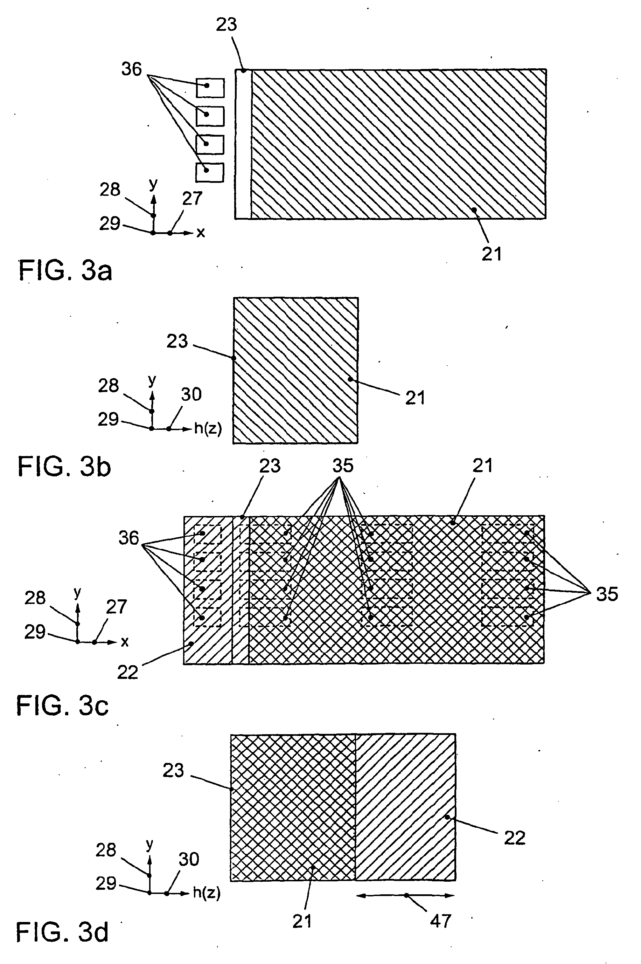

In Fig. 3a bis 3d ist eine andere Ausführungsform exemplarisch schematisch dargestellt. Gleiche technische Merkmale weisen dieselben Bezugszeichen wie in Fig. 2a- 2d auf. Bei dieser Ausführungsform sind zusätzlich getrennt von der als Touchscreen ausgebildeten Anzeigefläche 23 neben dieser Anzeigefläche 23 weitere Bedienelemente 36 angeordnet. Der als Aktivierungsvolumen ausgebildete Aktivierungsbereich 21 umfasst einen Raumbereich vor diesen weiteren Bedienelementen 36, wie aus Fig. 3a und 3d hervorgeht, nicht. Dieses bedeutet, dass diese weiteren Bedienelemente 36 von einem Betätigungselement bei einem Betreiben der Anzeige- und Bedienvorrichtung in dem Anzeigemodus bedient werden können, ohne einen Wechsel des Betriebsmodus auszulösen. Die weitern Bedienelemente 36 können in die Anzeige- und Bedienvorrichtung integriert sein, d.h., beispielsweise in einem gemeinsamen Steuergerät angeordnet sein, oder getrennt von dieser ausgebildet sein. Ebenso können nur einzelne der Bedienelemente 35 getrennt oder integriert mit der Anzeige und Bedienvorrichtung ausgebildet sein.

Der in Fig. 3c und 3d zusätzlich dargestellte als Haltevolumen 22 ausgebildete Haltebereich umfasst den Raum vor den weiteren Bedienelementen 36 zusätzlich zu dem gesamten Raum vor der Anzeigefläche 23. Angrenzend an die Anzeigefläche erstreckt sich der Haltebereich somit über eine seitliche Grenze 37 der Anzeigefläche 23 hinaus.

Die Ausgestaltung des Haltebereichs und des Aktivierungsbereichs kann auf viele Weisen ausgeführt sein. Insbesondere kann sich der Haltebereich über mehrere Grenzen der Anzeigefläche hinaus erstrecken.

Ebenso wie der Aktivierungsbereich kann der Haltebereich kontextabhängig definiert sein. D.h., seine Ausgestaltung kann von dem jeweils aktuellen Bedien- und/oder Anzeigekontext und/oder einem Fahrzeug- oder Fahrerzustand abhängig sein. Ferner ist es wünschenswert, den Aktivierungsbereich und/oder den Haltebereich nutzerabhängig gestalten zu können. Hierdurch ist es möglich, die Aktivierungs- und/oder Haltebereiche, die Sitzhaltung im Kraftfahrzeug usw. angepasst auszugestalten. Ferner ist eine Unterscheidung der Aktivierungs- und/oder Haltebereiche für den Fahrer und den Beifahrer von Vorteil.

Die Sensoren der Sensoreinheit können beispielsweise mittels einer Übertragung von Hochfrequenzsignalen über den Nutzer arbeiten, wie dieses beispielsweise in der bereits oben erwähnten WO 2004/078536 beschrieben ist. Hierbei können über einen Fahrersitz und einen Beifahrersitz unterschiedliche Hochfrequenzsignale kapazitiv in den Fahrer und Beifahrer eingekoppelt werden. Diese unterschiedlichen, über den Körper des Fahrers und des Beifahrers übertragenen Signale können die Sensoren der positionsempfindlichen Sensoreinheit unterscheiden und so den als Betätigungselement verwendeten Finger des Beifahrers von dem des Fahrers unterscheiden.

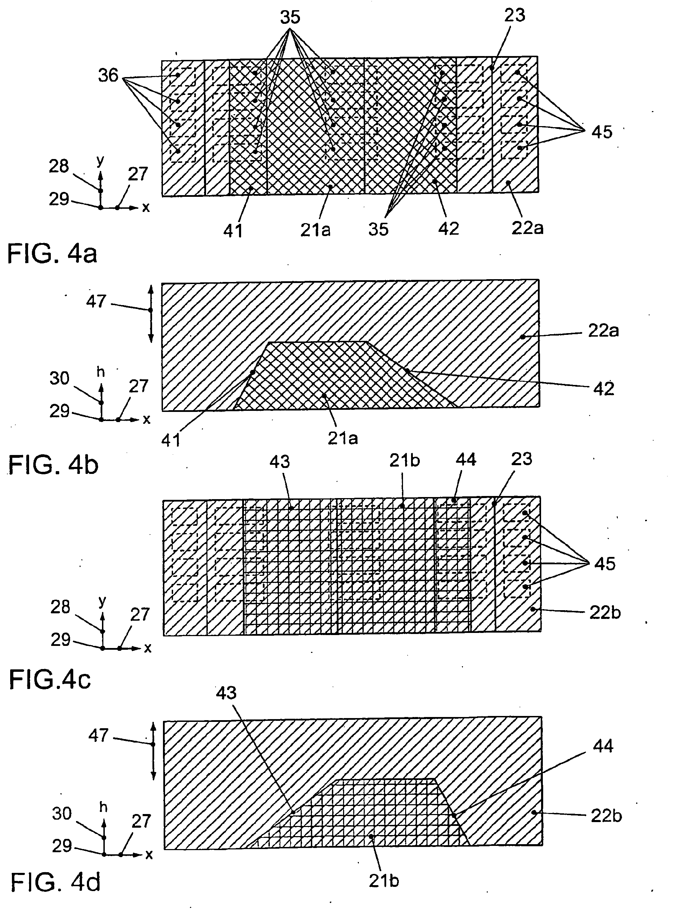

In Fig. 4a und 4b sind ein als Aktivierungsvolumen 21a ausgebildeter Aktivierungsbereich und als Haltevolumen 22a ausgebildeter Haltebereich für den Fahrer und in Fig. 4c und 4d entsprechend ein als Aktivierungsvolumen 21b ausgebildeter Aktivierungsbereich und als Haltevolumen 22b ausgebildeter Haltebereich des Beifahrers gezeigt. Die Haltevolumina 22a und 22b, d.h. die Haltebereiche, sind in der dargestellten Ausführungsform identisch. Sie könnten sich in einer anderen Ausführungsform aber auch unterscheiden.

Die Aktivierungsvolumina 21 a und 21 b sind nicht quaderförmig ausgebildet, sondern weisen abgeflachte Seiten 41, 42 und 43, 44 auf. Geht man davon aus, das der Fahrer im Kraftfahrzeug relativ zu der Anzeigefläche 23 in negativer x-Achsenrichtung und der Beifahrer in positiver x-Achsenrichtung sitzen, so sind die jeweils dem Fahrer und dem Beifahrer entsprechend abgewandten abgeflachten Seiten 42 (für den Fahrer) und 43 (für den Beifahrer) stärker abgeflacht, um eine Bedienung von noch weiteren Bedienelementen 45 durch den Fahrer bzw. der weiteren Bedienelemente 36 durch den Beifahrer "vorbei an der" oder "quer über die" Anzeigefläche zu ermöglichen, ohne mit dem Betätigungselement in den Aktivierungsbereich (das Aktivierungsvolumen 21 a bzw. 21b) zu gelangen.

Die Haltebereiche umfassen jeweils auch den Raum vor den weiteren Bedienelementen 36 und den noch weiteren Bedienelementen 45. Ein Teil der eingeblendeten Bedienelemente 35, insbesondere die, die benachbart zu den weiteren Bedienelementen 36 oder den noch weiteren Bedienelementen 45 angeordnet sind, können in einer anderen Ausführungsform durch Bedienelementzuordnungen ersetzt sein. Diese können ebenfalls transparent eingeblendet sein, um dahinter die angezeigten Informationen wahrnehmbar zu erhalten, die im Anzeigemödus angezeigt werden.

Man kann den Haltebereich und den Aktivierungsbereich jeweils auch als Punktmengen im zwei- oder dreidimensionalen Raum betrachten. Bei einer Betrachtung des Aktivierungsbereichs als Punktmenge liegen bei den oben beschriebenen Ausführungsformen sämtliche Punkte des Aktivierungsbereichs bei einer Projektion auf die Anzeigefläche entlang einer ausgezeichneten Projektionsrichtung, die vorzugsweise durch eine Flächennormale im Mittelpunkt der Anzeigefläche vorgegeben ist, in einem Aktivierungsbereichs-Projektionsgebiet, das nicht die gesamte Fläche der Anzeigefläche überdeckt. Bei einer Betrachtung des Haltebereichs als Punktmenge liegen sämtliche Punkte des Haltebereichs bei einer Projektion auf die Anzeigefläche entlang der ausgezeichneten Projektionsrichtung, die vorzugsweise durch eine Flächennormale im Mittelpunkt der Anzeigefläche vorgegeben ist, in einem weiteren Haltebereichs-Projektionsgebiet, das eine echte Obermenge des Aktivierungsbereichs-Projektionsgebiets ist. Die in Fig. 2c, 3c, 4a und 4c dargestellten schraffierten Gebiete des Aktivierungsvolumens 21, 21a, 21b und des Haltevolumens 22, 22a, 22b entsprechen jeweils den Aktivierungsbereichs-Projektionsgebieten und den Haltebereichs-Projektionsgebieten.

Hat der Finger das Haltevolumen verlassen, so werden bei den hier beschriebenen Ausführungsformen vorzugsweise die eingeblendeten Bedienelemente 35 in ihrer Darstellung dahingehend abgeändert, dass das Transparenzniveau erhöht wird, beispielsweise auf 50 %. Zusätzlich oder alternativ kann die Darstellung der eingeblendeten Bedienelemente und/oder Bedienelementzuordnungen auch in Graustufen erfolgen. Andere Ausgestaltungen der Änderung sind möglich. Die Änderung der Darstellung soll so vorgenommen werden, dass dem Nutzer grafisch mitgeteilt wird, dass er mit dem Finger das Haltevolumen verlassen hat. Ein darüber hinausgehender Informationsverlust soll jedoch vorzugsweise nicht stattfinden. Nach einer vorgegebenen Zeitspanne nachdem das Betätigungselement den Haltebereich verlassen hat, werden die Bedienelemente 35 vorzugsweise ausgeblendet und anschließend in den Anzeigemodus zurückgewechselt. Hierfür ist somit keine zusätzliche Bedienhandlung notwendig. Tritt das Betätigungselement vor einen Wechsel des Betriebsmodus erneut in den Haltebereich ein, so unterbleibt der Wechsel. Eine Darstellungsänderung der Bedienelemente/Bedienelementzuordnungen usw. wird rückgängig gemacht.

Das Haltevolumen 22, 22a, 22b erstreckt sich vorzugsweise tiefer in den Raum 31 als das Aktivierungsvolumen 21, 21a, 21b. Hierdurch wird eine "natürliche Hysterese" für eine Aktivierung und ein anschließendes Verlassen des Haltevolumens geschaffen. Hiermit ist gemeint, dass es erforderlich ist, das Betätigungselement aktiv über eine gewisse Distanz, die etwa einem Tiefenunterschied 47 des Aktivierungsvolumens 21, 21a, 21b und des Haltevolumens 22, 22a, 22b entspricht, nach dem Aktivieren bewegt werden muss, bevor das Haltevolumen 22, 22a, 22b wieder verlassen ist. Ein unbeabsichtigtes sofortiges Verlassen des Haltevolumens und die oben beschriebene beispielhafte hiermit verknüpfte Änderung der Darstellung der entsprechenden Bedienelemente 35 und/oder ein Wechsel in den Anzeigemodus werden vermieden.

Es ist möglich, die Anzeige- und Bedienvorrichtung so ausgestalten, dass weitere Betriebsmodi vorgesehen sind, die beispielsweise über ein Betätigen eines der Bedienelemente aktivierbar sind.

Bei den dargestellten Ausführungsformen ist die positionsempfindliche Sensoreinheit, jeweils als Sensoreinheit zum Erfassen einer dreidimensionalen Position des Betätigungselements ausgebildet. Eine solche Ausführungsform wird bevorzugt. In einer einfachen Ausführungsform kann die Erfindung auch ausschließlich mit einer beispielsweise als Touchscreen ausgebildeten Anzeigvorrichtung realisiert werden. Hier wären dann der Aktivierungsbereich und der Haltebereich zweidimensionale unterschiedliche Bereiche und das Betätigungselement müsste, um in dem Haltebereich zu bleiben, in stetigem Kontakt mit der Anzeigefläche verbleiben.

Die beschriebenen Anzeige- und Bedienvorrichtungen sind vorzugsweise als Touchscreen ausgebildet oder umfassen einen solchen. Es sind jedoch auch Ausführungsformen denkbar, die mit einer Projektionsvorrichtung ausgestaltet sind. Eine Erfassung einer Bedienhandlung eines auf die Anzeigefläche projizierten virtuellen Bedienelements kann beispielsweise mittels der positionsempfindlichen Sensoreinheit erfolgen oder über in bzw. auf der Projektionsfläche angeordneten Bedienelementen.

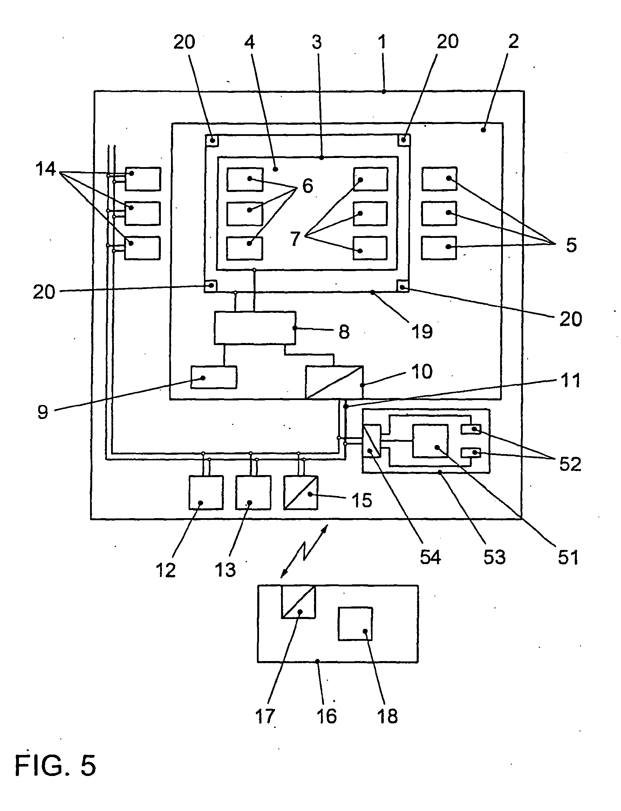

In Fig. 5 ist eine weitere Ausführungsform einer Anzeige- und Bedienvorrichtung 1 dargestellt, die der nach Fig. 1 ähnelt. Gleiche technische Merkmale sind mit identischen Bezugszeichen versehen. Die Ausführungsform unterscheidet sich von der nach Fig. 1 dadurch, dass zusätzlich ein interaktives Bedienelement 51 vorgesehen ist. Diese ist als berührungsempfindliches positionsempfindliches Bedienelement, beispielsweise als Touchpad, Joystick, Trackball usw., ausgebildet. Benachbart zu dem interaktiven Bedienelement 51 sind andere Bedienelemente 52 angeordnet. Das eine interaktive Bedienelement 51 und die anderen Bedienelemente 52 sind in einer Bedieneinheit 53 zusammengefasst, die wiederum über eine weitere Schnittstelle 54, den Fahrzeugbus 11 und die Schnittstelle 10 mit der Steuereinheit verbunden sind. Die Bedieneinheit kann bei einer anderen Ausführungsform auch Bestandteil der Anzeige- und Bedienvorrichtung sein.

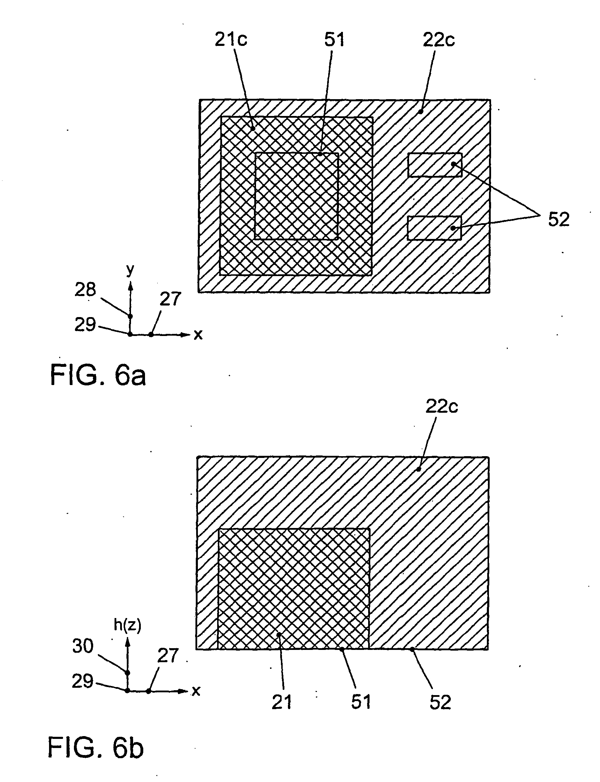

In Fig. 6 und 6b sind zusätzliche Ausführungsformen eines als Aktivierungsvolumens 21c ausgebildeten Aktivierungsbereichs und eines als Haltevolumens 22c ausgebildeten Haltebereichs dargestellt. Während das Aktivierungsvolumen 21c angrenzend an das interaktive Bedienelement 51 nur dessen Fläche (in anderen Ausführungsformen beispielsweise auch nur einen Teil der Fläche) umfasst, umfasst das Haltevolumen angrenzend an die anderen Bedienelemente 52 auch einen Bereich vor diesen anderen Bedienelementen.

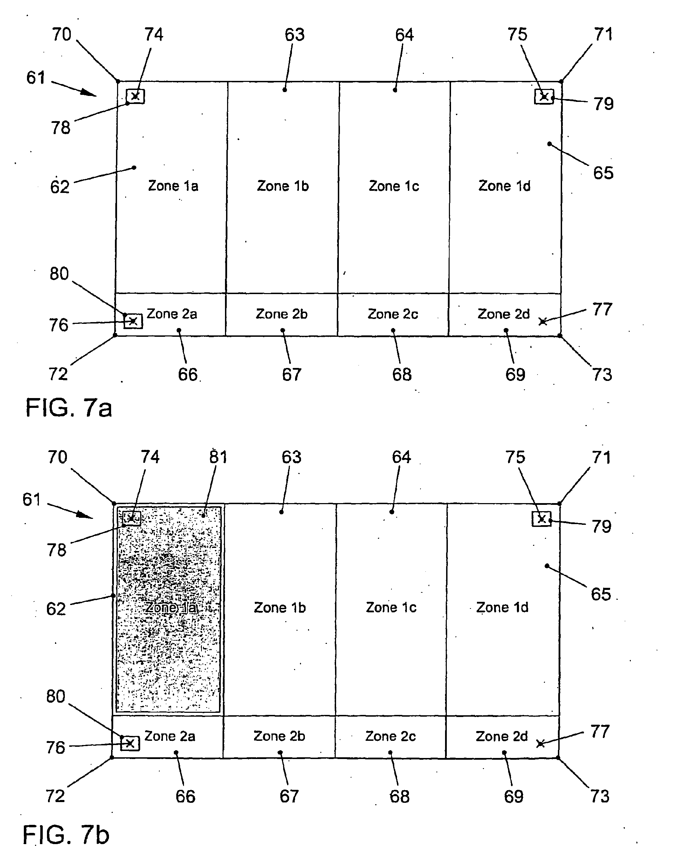

In Fig. 7a bis 7i sind Ansichten einer Anzeigefläche 61 dargestellt, um eine Verwendung der Anzeigefläche 61 für eine Benutzerschnittstelle zu erläutern, die mehrere getrennt aktivierbare Betriebsmodi kennt. In Fig. 7a ist eine Einteilung der Anzeigefläche in Zonen 1a bis 1d und 2a bis 2d 62-69 gezeigt. Die Einteilung wird nur gedanklich vorgenommen und in der Regel nicht grafisch dargestellt. Die Zonen 1a bis 1d 62-65 werden beispielsweise zum Anzeigen von Informationen eines aktuellen primären Anzeige- und/oder Bedienkontextes verwendet. Beispielsweise werden alle Zonen 1 a bis 1 d zum Anzeigen einer Navigationskarte bei einer zielgeführten Navigation verwendet. Die Zonen 2a bis 2d 66-69 werden vorzugsweise als Status und Bedienbereich, beispielsweise zum Anzeigen von Informationen eines sekundären Anzeige- und/oder Bedienkontextes, verwendet. In diesen Zonen 2a bis 2d 66-69 werden beispielsweise Informationen und Bedienelemente eines Audiosystems oder eine Klimaanlage angezeigt.

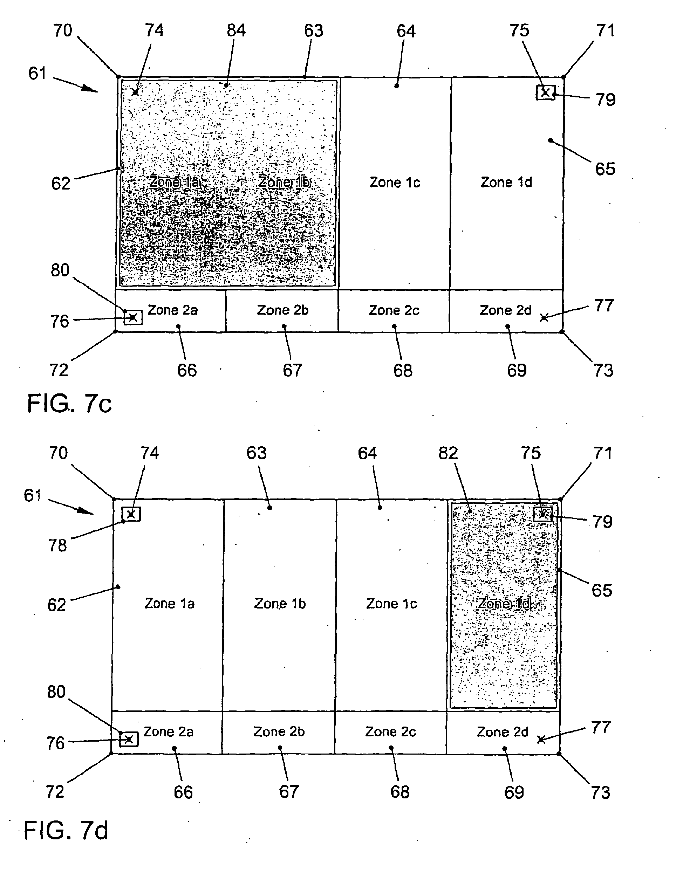

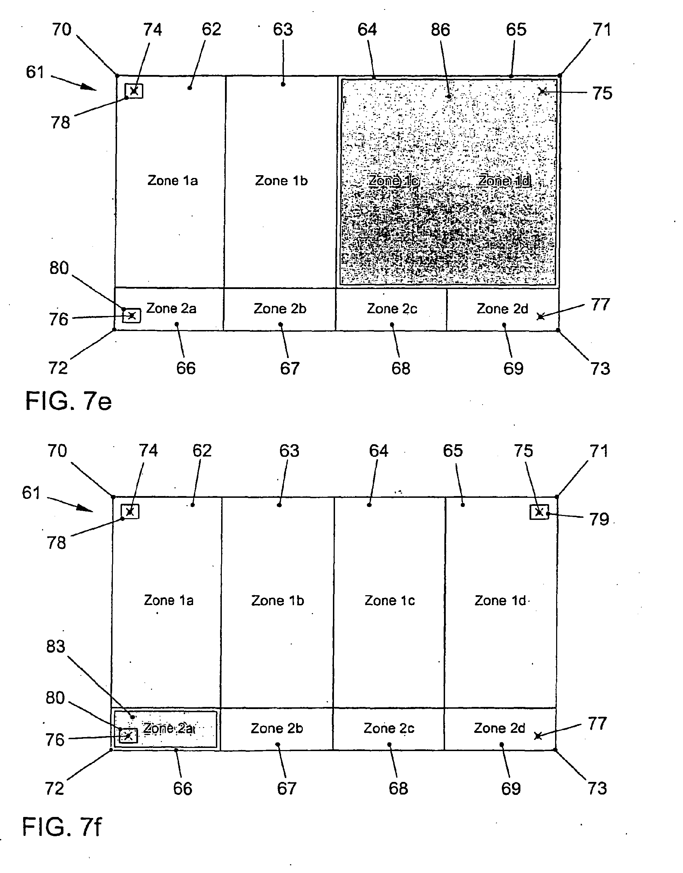

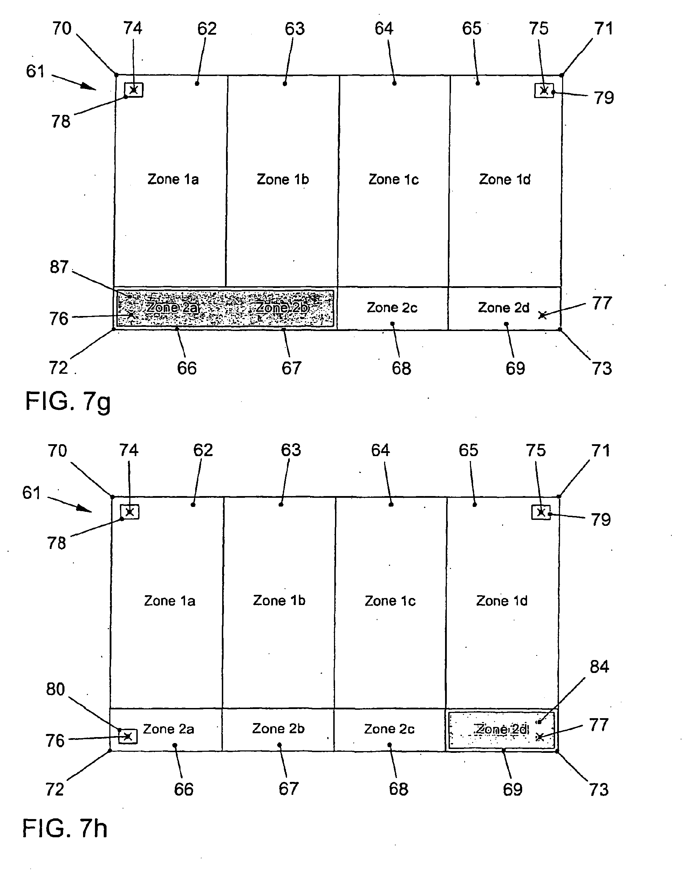

Die Benutzerschnittstelle ist so ausgestaltet, dass vier unterschiedliche Betriebsmodi aktivierbar sind. Im Folgenden wird davon ausgegangen, dass mit der Anzeigevorrichtung eine Positionsbestimmungseinheit gekoppelt ist, die Sensoren umfasst, die benachbart zu den Ecken 70-73 der Anzeigefläche 61, angeordnet sind. Geht man ferner davon aus, dass eine Position eines Betätigungselements am exaktesten nahe einem der Sensoren zu ermitteln ist, ist es vorteilhaft, nahe den Ecken 70-73 Darstellungspositionen 74-77 vorzusehen. Jeder der Darstellungspositionen 74-77 ist jeweils ein Aktivierungsvolumen 81-84 als Aktivierungsbereich zugeordnet. Bei der beschriebenen Ausführungsform stimmen die Grundflächen der Aktivierungsvolumina 81-84 mit den Flächen der Zonen 1a, 1d, 2a und 2d 62, 65, 66 und 69 über ein, wie in den Fig. 7b, 7d, 7f und 7h dargestellt ist. Eine Ausdehnung senkrecht zur Anzeigefläche 61 ist aus Gründen der Vereinfachung der Darstellung nicht gezeigt.

An den Darstellungspositionen 74-76 sind Indikatoren 78-80 dargestellt, die einen Nutzer auf die Existenz eines Aktivierungsbereichs zum Aktivieren eines anderen Betriebsmodus hinweisen sollen und dessen Bewegung des Betätigungselements führen sollen. An der Darstellungsposition 76 ist kein Indikator dargestellt. Es ergibt sich für den Fachmann somit, dass eine Darstellung der Indikatoren 78-80 zwar vorteilhaft ist, jedoch nicht erforderlich ist.

Wird das Betätigungselement (nicht dargestellt) in eines der Aktivierungsvolumina 81-84 (einen der Aktivierungsbereiche) bewegt, so wird ein Betriebsmodus aktiviert, der vorzugsweise nur in einem Teilbereich der Anzeigefläche 61 eine wahrnehmbare Betriebsmodusänderung bewirkt und in dem Restbereich den Betriebsmodus wie in dem zuvor aktivierten Betriebsmodus fortsetzt. Besonders bevorzugt ist dieser Teilbereich mit der Zone 62, 65, 66 und 69 identisch, in der die Darstellungsposition 74-77 liegt, der der Aktivierungsbereich zugeordnet ist. Wird an der Darstellungsposition 74-77 kein Indikator angezeigt, so ist diese Zuordnung des Aktiverungsbereichs zu der entsprechenden Zone auch direkt ohne eine Festlegung der Darstellungsposition 74-77 möglich. In einer anderen Ausführungsform kann sich die grafisch wahrnehmbare Änderung zusätzlich entsprechend auf eine benachbarte Zone 1b, 1c, 2b oder 2c 63, 64, 67 oder 68 erstrecken.

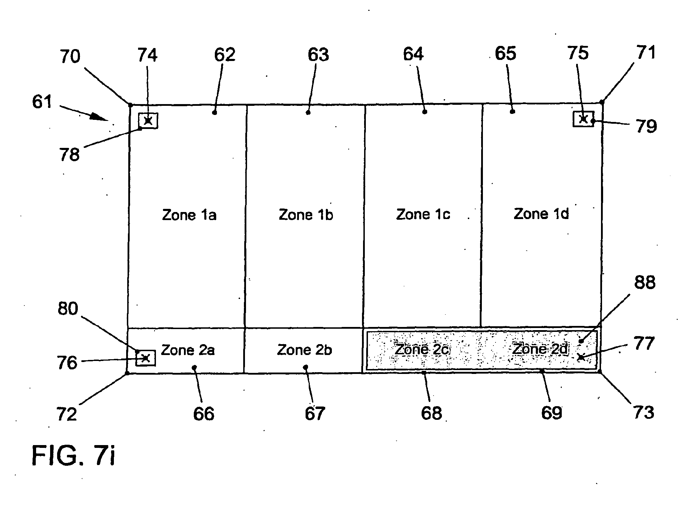

Jedem Aktivierungsvolumen 81 bis 84 ist ein entsprechendes Haltevolumen 85-88 zugeordnet, welches Haltebereiche sind. Die Grundflächen der Haltebereiche umfassen jeweils zwei benachbarte Zonen 1a und 1b, 1c und 1d, 2a und 2b sowie 2c und 2d, wie in Fig. 7c, 7e, 7g und 7i dargestellt ist.

Bei anderen Ausführungsformen können die Aktivierungsvolumina 81 und 82 die den Darstellungspositionen 74 und 75 bzw. den Zonen 62 und 65 zugeordnet sind, so ausgebildet sein, dass diese als Grundfläche nur einen oberen Bereich der jeweiligen Zone 1a und 1d 62, 65 umfassen. Hingegen können die Aktivierungsvolumina 83 und 84 der Zonen 2a und 2d 66 und 69 eine Grundfläche aufweisen, die in die benachbarten Zonen 1a bzw. 1b 62, 65 hineinragen, um so eine Aktivierungsmöglichkeit zu verbessern. Ist ein Abstand zwischen den Aktivierungsbereichen 81 und 83 sowie 82 und 84 vorgesehen, so wird auch eine Treffsicherheit, d.h. Aktivierungssicherheit, in dem Sinne, dass der gewünschte Betriebsmodus und nicht ein anderer Betriebsmodus aktiviert wird, gesteigert.

Es sind selbstverständlich Ausführungsformen vorgesehen, die zwei Aktivierungsbereiche und/oder Haltebereiche umfassen, die relativ zu einer oder mehren Anzeigeflächen und/oder einem oder mehreren interaktiven Bedienelementen definiert sind. Die zur Anzeige gebrachten Informationen können für die unterschiedlichen Aktivierungsbereiche verschieden oder gleich sein. Ebenso ist es denkbar einen Aktivierungsbereich zu schaffen, der disjunkte Unterbereiche umfasst, die bezüglich einer Anzeigefläche oder eines interaktiven Bedienelements definiert sind oder auch bezüglich unterschiedlicher Anzeigeflächen und/oder interaktiven Bedienelementen definiert sind und einen Aktivierungsbereich bilden. Ebenso kann ein Haltebereich auch unterschiedliche disjunkte Unterbereiche umfassen.

### Bezugszeichenliste

- 1: Kraftfahrzeug
- 2: Anzeige- und Bedienvorrichtung
- 3: Anzeigevorrichtung
- 4: Anzeigefläche
- 5: Bedienelement
- 6: virtuelle Bedienelemente
- 7: Bedienelementzuordnung
- 8: Steuereinheit
- 9: Speichervorrichtung
- 10: Schnittstelle
- 11: Fahrzeugbus
- 12, 13: Fahrzeugsysteme
- 14: andere Bedienelemente
- 15: Fahrzeugschnittstelle
- 16: fahrzeugexterne Vorrichtung
- 17: Sende- und Empfangsschnittstelle
- 18: Rechnereinheit
- 19: positiohsempfindliche Sensoreinheit
- 20: Sensoren
- 21, 21a, 21b, 21c: Aktivienrngsvolumen
- 22, 22a, 22b, 22c: Haltevolumen
- 23: Anzeigefläche
- 24: zentraler Bereich
- 25,26: Toggle-Tasten
- 27: x-Achse
- 28: y-Achse
- 29: Koordinatensystem
- 30: h-Achse
- 31: Raum vor der Anzeigefläche
- 32, 33: Randbereiche
- 35: (virtuelle) Bedienelemente 35
- 36: weitere Bedienelemente
- 37: seitliche Grenze der Anzeigefläche
- 41, 42, 43, 44: abgeflachte Seiten
- 45: noch weitere Bedienelemente
- 47: Tiefenunterschied
- 51: interaktives Bedienelement
- 52: andere Bedienelemente
- 53: Bedieneinheit
- 54: weitere Schnittstelle
- 61: Anzeigefläche
- 62-69: Zonen
- 70-73: Ecken
- 74-77: Darstellungspositionen
- 78-80: Indikatoren
- 81-84: Aktivierungsvolumina
- 85-88: Haltevolumina

## Patentansprüche

1. Anzeige- und Bedienvorrichtung (1) eines Kraftfahrzeugs (2), die in einem ersten Modus und mindestens in einem zweiten Modus betreibbar ist, umfassend eine Anzeigevorrichtung (3) zum Anzeigen von Informationen auf einer Anzeigefläche (4, 23, 61) und mindestens einer positionsempfindlichen Sensoreinheit (19) zum Ermitteln einer Position eines Betätigungselements relativ zu der Anzeigefläche (4, 23, 61) und/oder mindestens einem interaktiven Bedienelement (51), wobei die Aktivierung des zweiten Modus und ein Betrieb in dem zweiten Modus von einer Anwesenheit des Betätigungselements räumlich relativ zu der Anzeigefläche (4, 23, 61) und/oder dem mindestens einen interaktiven Bedienelement (51) abhängig ist,
**dadurch gekennzeichnet, dass**
mindestens ein Aktivierungsbereich und mindestens ein hiervon verschiedener Haltebereich existieren und die Aktivierung des zweiten Modus erfolgt, wenn die ermittelte Position des Betätigungselements in dem mindestens einen Aktivierungsbereich liegt, und der Betrieb in dem zweiten Modus von der Anwesenheit des Betätigungselements in dem mindestens einen Haltebereich abhängig ist.

2. Anzeige- und Bedienvorrichtung (1) nach Anspruch 1, **dadurch gekennzeichnet, dass** der mindestens eine Aktivierungsbereich angrenzend an die Anzeigefläche (4, 23, 61) nicht eine gesamte Fläche der Anzeigefläche (4, 23, 61) überdeckt.

3. Anzeige- und Bedienvorrichtung (1) nach Anspruch 1 oder 2, **dadurch gekennzeichnet, dass** der mindestens eine Haltebereich angrenzend an die Anzeigefläche einen größeren Teil der Fläche der Anzeigefläche (4, 23, 61) als der Aktivierungsbereich überdeckt.

4. Anzeige- und Bedienvorrichtung (1) nach einem der vorangehenden Ansprüche, **dadurch gekennzeichnet, dass** die mindestens eine positionsempfindliche Sensoreinheit (19) eine berührungslos wirkende Sensoreinheit ist.

5. Anzeige- und Bedienvorrichtung (1) nach einem der vorangehenden Ansprüche, **dadurch gekennzeichnet, dass** die mindestens eine Sensoreinheit (19) ausgebildet ist, die Position des Betätigungselements, vorzugsweise eines Körperteils, im dreidimensionalen Raum zu erfassen.

6. Anzeige- und Bedienvorrichtung (1) nach einem der vorangehenden Ansprüche, **dadurch gekennzeichnet, dass** der mindestens eine Aktivierungsbereich ein AktivierungsVolumen (21, 21a, 21b, 21c, 81-84) ist und/oder der mindestens eine Haltebereich ein Haltevolumen (22, 22a, 22b, 22c, 85-88) ist.

7. Anzeige- und Bedienvorrichtung (1) nach einem der vorangehenden Ansprüche, **dadurch gekennzeichnet, dass** der mindestens eine Aktivierungsbereich vollständig von dem mindestens einen Haltebereich umschlossen ist und sich insbesondere der mindestens eine Haltebereich weiter in einen Raum (31) vor der Anzeigefläche (4, 23, 61) erstreckt als der mindestens eine Aktivierungsbereich.

8. Anzeige- und Bedienvorrichtung (1) nach einem der vorangehenden Ansprüche, **dadurch gekennzeichnet, dass** der mindestens eine Haltebereich sich seitlich über eine Grenze (37) der Anzeigefläche (4, 23, 61) und/oder des mindestens einen interaktiven Bedienelements (51) erstreckt.

9. Anzeige- und Bedienvorrichtung (1) nach einem der vorangehenden Ansprüche, **dadurch gekennzeichnet, dass** der mindestens eine Haltebereich mindestens einen Bereiche vor einem neben der Anzeigefläche (4, 23, 61) und/oder entsprechend dem mindestens einen interaktiven Bedienelement (51) angeordneten Bedienelement (36, 45, 52) umfasst.

10. Anzeige- und Bedienvorrichtung (1) nach einem der vorangehenden Ansprüche, **dadurch gekennzeichnet, dass** der mindestens eine Aktivierungsbereich so ausgestaltet ist, dass das mindestens eine neben der Anzeigefläche (4, 23, 61) oder entsprechend dem mindestens einen interaktiven Bedienelement (51) angeordnete Bedienelement (36, 45, 52) und/oder an einem Rand der Bedienfläche angeordnete mindestens eine weitere Bedienelement (25, 26) durch das Betätigungselement bedienbar sind, ohne dass das Betätigungselement in den mindestens einen Aktivierungsbereich gelangt.

11. Anzeige- und Bedienvorrichtung (1) nach einem der vorangehenden Ansprüche, **dadurch gekennzeichnet, dass** der zweite Modus als Bedienmodus ausgebildet ist, bei dem mindestens ein zusätzliches Bedienelement (35) und/oder mindestens eine Bedienelementzuordnung für ein beabstandet zu der Anzeigefläche (4, 23, 61) angeordnetes Bedienelement (36, 45, 52) und/oder für das mindestens eine interaktive Bedienelement (51) zusätzlich und/oder optimiert für eine Bedienung dargestellt sind.

12. Anzeige- und Bedienvorrichtung (1) nach einem der vorangehenden Ansprüche, **dadurch gekennzeichnet, dass** der Betrieb in dem zweiten Modus eine grafisch wahrnehmbare Modusänderung nur in einem Teilbereich der Anzeigefläche (61) bewirkt und in dem Restbereich der Anzeigefläche ein Betrieb wie in dem zuvor aktivierten Modus vorsetzt ist.

13. Anzeige- und Bedienvorrichtung (1) nach einem der vorangehenden Ansprüche, **dadurch gekennzeichnet, dass** in dem ersten Modus mehreren Darstellungspositionen auf der Anzeigefläche jeweils ein von übrigen Aktivierungsbereichen disjunkter Aktivierungsbereich zugeordnet ist und bei einem Erfassen des Betätigungselements in einem der Aktivierungsbereiche, ein diesem der Aktivierungsbereiche zugeordneter Modus aktiviert wird, der eine Modusänderung nur in einem diesem der Aktivierungsbereiche zugeordneten Teilbereich der Anzeigefläche (61) bewirkt, und der Betrieb in diesem Modus von der Anwesenheit des Betätigungselements in einem von dem Aktivierungsbereich verschiedenen, diesem zugeordneten Haltebereich abhängig ist

14. Anzeige- und Bedienvorrichtung (1) nach Anspruch 13, **da-durch gekennzeichnet, dass** der einem der disjunkten Aktivierungsbereiche zugeordnete Haltebereich von den übrigen Aktivierungsbereichen und vorzugsweise auch von den diesen zugeordneten Haltebereichen disjunkt ist.

15. Anzeige- und Bedienvorrichtung (1) nach einem der vorangehenden Ansprüche, **dadurch gekennzeichnet, dass** an mindestens einer der Darstellungspositionen (74-77) ein Indikator (78-80) dargestellt ist.

16. Anzeige- und Bedienvorrichtung (1) nach einem der vorangehenden Ansprüche, **dadurch gekennzeichnet, dass** mindestens eine der Darstellungspositionen (74-77) benachbart zu dem mindestens einen Sensor (19) auf der Anzeigefläche angeordnet ist.

17. Anzeige- und Bedienvorrichtung (1) nach einem der vorangehenden Ansprüche, **dadurch gekennzeichnet, dass** ein Betrieb in dem zweiten Modus oder einem weiteren Modus nach einer Aktivierung über ein Erfassen des Betätigungselements in dem mindestens einen Aktivierungsbereich oder in dem entsprechend zugehörigen Aktivierungsbereich nur für eine vorgegebene Zeitspanne erfolgt, nachdem das Betätigungselement den mindestens einen Haltebereich oder den entsprechend zugehörigen Haltebereich verlassen hat.

18. Anzeige- und Bedienvorrichtung (1) nach einem der vorangehenden Ansprüche, **dadurch gekennzeichnet, dass** die mindestens eine Sensoreinheit (19) Betätigungselemente von mindestens zwei unterschiedlichen Nutzern unterscheiden kann und den mindestens zwei unterschiedlichen Nutzern mindestens zwei unterschiedliche Aktivierungsbereiche zugeordnet sind, wobei eine Aktivierung des zweiten Modus nur erfolgt, wenn eine Position des Betätigungselements eines Nutzer in dem ihm zugeordneten der mindestens zwei unterschiedlichen Aktivierungsbereiche erfasst ist.

19. Anzeige- und Bedienvorrichtung (1) nach einem der vorangehenden Ansprüche, **dadurch gekennzeichnet, dass** der mindestens eine Aktivierungsbereich unterschiedliche, disjunkte Unterbereiche umfasst, wobei die Unterbereiche jeweils der Anzeigefläche oder dem mindestens einen interaktiven Bedienelement zugeordnet sind.

20. Anzeige- und Bedienvorrichtung (1) nach einem der vorangehenden Ansprüche, **dadurch gekennzeichnet, dass** das mindestens eine interaktive Bedienelement (51) als positionsempfndlicher Berührungssensor, insbesondere als Touchpad, ausgebildet ist.

## Claims

1. Display and operation device (1) of a motor vehicle (2), which can be operated in a first mode and at least in a second mode, comprising a display device (3) for displaying information on a display area (4, 23, 61) and at least one position-sensitive sensor unit (19) for determining a position of an activation element relative to the display area (4, 23, 61) and/or to at least one interactive operation element (51), wherein the activation of the second mode and operation in the second mode are dependent on the presence of the activation element spatially relative to the display area (4, 23, 61) and/or the at least one interactive operation element (51),
**characterized in that**
there are at least one activation region and at least one stopping region which is different therefrom, and the second mode is activated when the determined position of the activation element is located in the at least one activation region, and the operation in the second mode is dependent on the presence of the activation element in the at least one stopping region.

2. Display and operation device (1) according to Claim 1, **characterized in that** adjoining the display area (4, 23, 61) the at least one activation region does not cover an entire surface of the display area (4, 23, 61).

3. Display and operation device (1) according to Claim 1 or 2, **characterized in that** adjacent to the display area the at least one stopping region covers a larger part of the surface of the display area (4, 23, 61) than the activation region.

4. Display and operation device (1) according to one of the preceding claims, **characterized in that** the at least one position-sensitive sensor unit (19) is a sensor unit which acts in a contactless fashion.

5. Display and operation device (1) according to one of the preceding claims, **characterized in that** the at least one sensor unit (19) is designed to detect the position of the activation element, preferably of a body part, in the three-dimensional space.

6. Display and operation device (1) according to one of the preceding claims, **characterized in that** the at least one activation region is an activation volume (21, 21a, 21b, 21c, 81-84), and/or the at least one stopping region is a stopping volume (22, 22a, 22b, 22c, 85-88).

7. Display and operation device (1) according to one of the preceding claims, **characterized in that** the at least one activation region is surrounded completely by the at least one stopping region, and the at least one stopping region in particular extends further into a space (31) in front of the display area (4, 23, 61) than the at least one activation region.

8. Display and operation device (1) according to one of the preceding claims, **characterized in that** the at least one stopping region extends laterally over a boundary (37) of the display area (4, 23, 61) and/or of the at least one interactive operation element (51).

9. Display and operation device (1) according to one of the preceding claims, **characterized in that** the at least one stopping region comprises at least one region in front of an operation element (36, 45, 52) which is arranged next to the display area (4, 23, 61) and/or in a way which corresponds to the at least one interactive operation element (51).

10. Display and operation device (1) according to one of the preceding claims, **characterized in that** the at least one activation region is configured in such a way that the at least one operation element (36, 45, 52) which is arranged next to the display area (4, 23, 61) or in a way which corresponds to the at least one interactive operation element (51) and/or at least one further operation element (25, 26) which is arranged at an edge of the operation area can be operated by the activation element without the activation element moving into the at least one activation region.

11. Display and operation device (1) according to one of the preceding claims, **characterized in that** the second mode is configured as an operation mode in which at least one additional operation element (35) and/or at least one operation element assignment are/is represented additionally, and/or in a way which is optimized for operation, for an operation element (36, 45, 52) which is arranged at a distance from the display area (4, 23, 61) and/or for the at least one interactive operation element (51).

12. Display and operation device (1) according to one of the preceding claims, **characterized in that** the operation in the second mode brings about a graphically perceptible change of mode only in part of the display area (61), and in the rest of the display area operation is preset as in the previously activated mode.

13. Display and operation device (1) according to one of the preceding claims, **characterized in that** in the first mode a plurality of representation positions on the display area are each assigned an activation region which is disjunctive from the other activation regions, and when the activation element is detected in one of the activation regions, a mode which is assigned to this activation region and which brings about a change of mode only in part of the display area (61) which is assigned to this activation region is activated, and the operation in this mode is dependent on the presence of the activation element in a stopping region which is different from the activation region and is assigned thereto.

14. Display and operation device (1) according to Claim 13, **characterized in that** the stopping region which is assigned to one of the disjunctive activation regions is disjunctive from the other activation regions and also preferably disjunctive from the stopping regions which are assigned thereto.

15. Display and operation device (1) according to one of the preceding claims, **characterized in that** an indicator (78-80) is represented at at least one of the representation positions (74-77).

16. Display and operation device (1) according to one of the preceding claims, **characterized in that** at least one of the representation positions (74-77) is arranged adjacent to the at least one sensor (19) on the display area.

17. Display and operation device (1) according to one of the preceding claims, **characterized in that** operation in the second mode or in a further mode takes place after activation by detection of the activation element in the at least one activation region, or in the correspondingly associated activation region only for a predefined time period after the activation element has left the at least one stopping region or the correspondingly associated stopping region.

18. Display and operation device (1) according to one of the preceding claims, **characterized in that** the at least one sensor unit (19) can differentiate activation elements from at least two different users, and the at least two different users are assigned at least two different activation regions, wherein activation of the second mode takes place only if a position of the activation element of a user **in that** activation region of the at least two different activation regions which is assigned to said user is detected.

19. Display and operation device (1) according to one of the preceding claims, **characterized in that** the at least one activation region comprises different disjunctive sub-regions, wherein the sub-regions are each assigned to the display area or to the at least one interactive operation element.

20. Display and operation device (1) according to one of the preceding claims, **characterized in that** the at least one interactive operation element (51) is embodied as a position-sensitive contact sensor, in particular as a touchpad.

## Revendications

1. Dispositif d'affichage et de commande (1) d'un véhicule automobile (2), lequel peut être utilisé dans un premier mode et au moins dans un deuxième mode, comprenant un dispositif d'affichage (3) pour afficher des informations sur une surface d'affichage (4, 23, 61) et au moins une unité de détection (19) sensible à la position pour déterminer une position d'un élément d'actionnement par rapport à la surface d'affichage (4, 23, 61) et/ou au moins un élément de commande (51) interactif, l'activation du deuxième mode et un fonctionnement dans le deuxième mode dépendant de la présence de l'élément d'actionnement dans l'espace par rapport à la surface d'affichage (4, 23, 61) et/ou l'au moins un élément de commande (51) interactif,
**caractérisé en ce que**
il existe au moins une zone d'activation et au moins une zone d'arrêt différente de celle-ci et l'activation du deuxième mode s'effectue lorsque la position déterminée de l'élément d'actionnement se trouve dans l'au moins une zone d'activation et le fonctionnement dans le deuxième mode dépend de la présence de l'élément d'actionnement dans l'au moins une zone d'arrêt.

2. Dispositif d'affichage et de commande (1) selon la revendication 1, **caractérisé en ce que** l'au moins une zone d'activation adjacente à la surface d'affichage (4, 23, 61) ne recouvre pas une surface entière de la surface d'affichage (4, 23, 61).

3. Dispositif d'affichage et de commande (1) selon la revendication 1 ou 2, **caractérisé en ce que** l'au moins une surface d'arrêt adjacente à la surface d'affichage recouvre une partie de la surface d'affichage (4, 23, 61) plus grande que la zone d'activation.

4. Dispositif d'affichage et de commande (1) selon l'une des revendications précédentes, **caractérisé en ce que** l'au moins une unité de détection (19) sensible à la position est une unité de détection à action sans contact.

5. Dispositif d'affichage et de commande (1) selon l'une des revendications précédentes, **caractérisé en ce que** l'au moins une unité de détection (19) est configurée pour détecter la position de l'élément d'actionnement, de préférence d'une partie du corps, dans l'espace tridimensionnel.

6. Dispositif d'affichage et de commande (1) selon l'une des revendications précédentes, **caractérisé en ce que** l'au moins une zone d'activation est un volume d'activation (21, 21a, 21b, 21c, 81-84) et/ou l'au moins une zone d'arrêt est un volume d'arrêt (22, 22a, 22b, 22c, 85-88).

7. Dispositif d'affichage et de commande (1) selon l'une des revendications précédentes, **caractérisé en ce que** l'au moins une zone d'activation est entièrement entourée par l'au moins une zone d'arrêt et ladite au moins une zone d'arrêt s'étend plus loin dans un espace (31) devant la surface d'affichage (4, 23, 61) que l'au moins une zone d'activation.

8. Dispositif d'affichage et de commande (1) selon l'une des revendications précédentes, **caractérisé en ce que** l'au moins une zone d'arrêt s'étend latéralement au-dessus d'une limite (37) de la surface d'affichage (4, 23, 61) et/ou de l'au moins un élément de commande (51) interactif.

9. Dispositif d'affichage et de commande (1) selon l'une des revendications précédentes, **caractérisé en ce que** l'au moins une zone d'arrêt comprend au moins une zone devant un élément de commande (36, 45, 52) disposé à côté de la surface d'affichage (4, 23, 61) et/ou en fonction dudit au moins un élément de commande (51) interactif.

10. Dispositif d'affichage et de commande (1) selon l'une des revendications précédentes, **caractérisé en ce que** l'au moins une zone d'activation est configurée de telle sorte que ledit au moins un élément de commande (36, 45, 52) disposé à côté de la surface d'affichage (4, 23, 61) et/ou en fonction dudit au moins un élément de commande (51) interactif et/ou au moins un élément de commande supplémentaire (25, 26) disposé sur le bord de la surface de commande peuvent être commandés par l'élément d'actionnement sans que l'élément de commande ne pénètre dans l'au moins une zone d'activation.

11. Dispositif d'affichage et de commande (1) selon l'une des revendications précédentes, **caractérisé en ce que** le deuxième mode est conçu comme un mode de fonctionnement avec lequel au moins un élément de commande (35) supplémentaire et/ou au moins une affectation d'élément de commande pour un élément de commande (36, 45, 52) disposé à distance de la surface d'affichage (4, 23, 61) et/ou pour l'au moins un élément de commande (51) interactif sont représentés en complément et/ou de manière optimisée pour une commande.

12. Dispositif d'affichage et de commande (1) selon l'une des revendications précédentes, **caractérisé en ce que** le fonctionnement dans le deuxième mode provoque un changement de mode perceptible de manière graphique seulement dans une zone partielle de la surface d'affichage (61) et un fonctionnement comme dans le mode activé précédemment est supposé dans la zone restante de la surface d'affichage.

13. Dispositif d'affichage et de commande (1) selon l'une des revendications précédentes, **caractérisé en ce que** dans le premier mode, une zone d'activation dissociée des autres zones d'activation est à chaque fois associée à plusieurs positions de représentation sur la surface d'affichage et, lors de la détection de l'élément d'actionnement dans l'une des zones d'activation, un mode associé à cette zone parmi les zones d'activation est activé, lequel ne provoque un changement de mode que dans une zone partielle de la surface d'affichage (61) associée à cette zone parmi les zones d'activation et le fonctionnement dans ce mode dépend de la présence de l'élément d'actionnement dans une zone d'arrêt différente de la zone d'activation et associée à celle-ci.

14. Dispositif d'affichage et de commande (1) selon la revendication 13, **caractérisé en ce que** las zone d'arrêt associée à l'une des zones d'activation dissociées est dissociée des autres zones d'activation et de préférence aussi des zones d'arrêt qui leur sont associées.

15. Dispositif d'affichage et de commande (1) selon l'une des revendications précédentes, **caractérisé en ce qu'**un indicateur (78-80) est représenté à au moins l'une des positions de représentation (74-77).

16. Dispositif d'affichage et de commande (1) selon l'une des revendications précédentes, **caractérisé en ce qu'**au moins l'une des positions de représentation (74-77) est voisine de l'au moins un détecteur (19) sur la surface d'affichage.

17. Dispositif d'affichage et de commande (1) selon l'une des revendications précédentes, **caractérisé en ce qu'**un fonctionnement dans le deuxième mode ou dans un autre mode après une activation par le biais d'une détection de l'élément d'actionnement dans l'au moins une zone d'activation ou dans la zone d'activation associée correspondante n'a lieu qu'après un intervalle de temps prédéfini après lequel l'élément d'actionnement a quitté ladite au moins une zone d'arrêt ou la zone d'arrêt associée correspondante.

18. Dispositif d'affichage et de commande (1) selon l'une des revendications précédentes, **caractérisé en ce que** l'au moins une unité de détection (19) peut différencier les éléments d'actionnement d'au moins deux utilisateurs différents et au moins deux zones d'activation différentes sont associées auxdits au moins deux utilisateurs différents, une activation du deuxième mode n'ayant lieu que si une position de l'élément d'actionnement d'un utilisateur est détectée dans celle qui lui est associée desdites au moins deux zones d'activation différentes.

19. Dispositif d'affichage et de commande (1) selon l'une des revendications précédentes, **caractérisé en ce que** l'au moins une zone d'activation comprend des zones secondaires dissociées différentes, les zones secondaires étant respectivement associées à la surface d'affichage ou à l'au moins un élément de commande interactif.

20. Dispositif d'affichage et de commande (1) selon l'une des revendications précédentes, **caractérisé en ce que** l'au moins un élément de commande (51) interactif est réalisé sous la forme d'un détecteur de contact sensible à la position, notamment d'une tablette tactile.
